# EUROPEAN PATENT SPECIFICATION

(11) **EP 1 004 794 B1**
(45) Date of publication and mention of the grant of the patent: **18.02.2004**
(21) Application number: 99123302.4
(22) Date of filing: 22.11.1999
(51) Int. Cl.: F16G 3/16, F16G 3/10

(54) **Puzzle cut seaming apparatus using ultraviolet cure**
Einrichtung zum formschlüssigen Verbinden mit UV-Strahlungsbehandlung
Appareil de jonction à découpes imbriquées utilisant un traitement par ultraviolets

(30) Priority: 25.11.1998 US 200235
(43) Date of publication of application: 31.05.2000
(73) Proprietor: Xerox Corporation, Rochester, New York 14644 (US)
(72) Inventor: Thornton, Constance J., Ontario, New York 14519 (US); Schlueter, Edward L. Jr., Rochester, New York 14612 (US); Lovallo, Theodore, Williamson, New York 14589 (US)
(74) Representative: Grünecker, Kinkeldey, Stockmair & Schwanhäusser Anwaltssozietät

(56) References cited:
- EP-A- 0 688 804
- EP-A- 0 768 353
- WO-A-93/09152
- US-A- 5 487 707
- DATABASE WPI Section Ch, Week 198609 Derwent Publications Ltd., London, GB; Class A14, AN 1986-058372 XP002131406 & JP 61 009427 A (TOSHIBA KK), 17 January 1986 (1986-01-17)

## Description

The present invention relates to a puzzle cut seaming apparatus for producing seamed components, preferably puzzle cut seamed components, useful in electrostatographic reproducing apparatuses, including digital, image on image and contact electrostatic printing apparatuses. The seaming apparatus can be useful in seaming components such as fuser belts, pressure belts, intermediate transfer belts, transfuse belts, transport belts, developer belts, photoreceptor belts, and the like. The puzzle cut seaming apparatus administers an adhesive, preferably an ultraviolet curable adhesive, between two ends of a component, and cures the adhesive, preferably via ultraviolet light.

There still exists a need for a seam which has increased seam bonding strength to prevent pre-mature delamination, tearing or rupture. Further, there is a need for an improved component having a seam which provides a decreased or eliminated ripple effect. In addition, it is desired to provide a seam with virtual nil thickness differential with the main body of the component, as well as a component with good tensile and bending flexibility. Moreover, there is a need for a component which is easily and quickly fabricated.

US 5,487,707 discloses an endless flexible seamed belt formed by joining two ends of material from which the belt is fabricated, each end of which has a plurality of mutually mating elements in a puzzle cut pattern the opposite surfaces of which are in interlocking relationship to prevent separation of the ends. The opposite surfaces of the puzzle cut pattern are formed by an adhesive which has been cured by exposure to ultraviolet radiation.

Embodiments of the present invention include: a seaming apparatus for dispensing and curing an adhesive between two ends of a component so as to seam said component comprising: a) a base, on which to position the component; b) an adhesive dispenser to dispense adhesive between the two ends of the component to be seamed; and c) a first ultraviolet curing source adapted to cure said adhesive between said two ends of said component. It is preferable to use as the adhesive an ultraviolet curable adhesive.

Preferably said ultraviolet curable adhesive comprises an epoxy material.

Furthermore, it is preferable that said base comprises a second curing source.

The ultraviolet light especially has a wavelength of from about 200 to about 700 nanometers.

More preferably, said wavelength is from about 320 to about 480 nanometers.

It is also advantageous to use an ultraviolet light that has the intensity of from about 500 to about 600 milliwatt/sq-cm.

It is most preferable that the base comprises a first aperture.

According to a further embodiment, said first aperture corresponds to said two ends of said component to be seamed.

Furthermore, said apparatus may further comprise a securing device positioned in contact with said component to be seamed so as to secure said component to said base.

The securing device further may comprise a second aperture. In that case, said second aperture corresponds to said two ends of said component to be seamed.

The apparatus may further comprise a positioning device which controls the position of said curing source and said adhesive dispenser.

Said positioning device may control movement in the x, y and z planes.

According to a preferred embodiment, the component to be seamed comprises two ends which comprise mutually mating elements.

According to a preferred embodiment, the mutually mating elements comprise a first projection and a second receptacle geometrically oriented so that said second receptacle on the first end receives the first projection on the second end and wherein said first projection on said first end is received by said second receptacle on the second end to form a joint between the first and second ends.

The said mutually mating elements may be curved.

The said components to be seamed may be an image bearing element.

Preferably, the said image bearing element is a photoreceptor belt.

Further, the said seaming apparatus may comprise a leveling device to level the adhesive.

In case that the seaming apparatus includes a first and a second ultraviolet curing source to cure said adhesive between said two ends of said component, said first ultraviolet curing source is positioned above said component and said second ultraviolet curing source is positioned below said component.

Embodiments further include: a seaming apparatus for dispensing and curing an adhesive between two ends of a component so as to seam said component comprising: a) a base, on which to position the component; b) a component securing device comprising an aperture, and positioned in contact with the component to be seamed so as to secure the component to said base; c) an adhesive dispenser to dispense ultraviolet curable adhesive between the two ends of the component to be seamed; d) an ultraviolet curing source adapted to cure said adhesive between said two ends of said component using ultraviolet light; and e) an xyz positioning device which controls the position of said curing source and said adhesive dispenser.

For a better understanding of the present invention, reference may be had to the accompanying figures.
Figure 1 is a depiction of an electrostatographic apparatus.
Figure 2 is an enhanced view of an embodiment of a belt configuration and seam according to the present invention.
Figure 3 is an enlargement of a puzzle cut seam having a head and neck members according to one embodiment of the present invention.
Figure 4 is an enlargement of a puzzle cut seam having mushroom-shaped puzzle cut members according to another embodiment of the present invention.
Figure 5 is an enlargement of a puzzle cut seam having dovetail members according to another embodiment of the present invention.
Figure 6 is an enlargement of a puzzle cut seam having recessor and teeth members according to another embodiment of the present invention.
Figure 7 is an enlargement of a puzzle cut seam having receptacle and projection members of differing depth according to another embodiment of the present invention.
Figure 8 is an enlarged version of a belt according to one embodiment of the present invention and demonstrates a crevice between the puzzle cut members, the crevice containing an adhesive.
Figure 9 is an enlarged cross-sectional view of a belt according to a preferred embodiment of the invention and demonstrates a seven layer photoreceptor belt.
Figure 10 is a depiction of a puzzle cut seaming apparatus, according to a preferred embodiment of the invention.
Figure 11 is an overhead view of an embodiment of a securing device and base.
Figure 12 is an enlarged cross-sectional view of an embodiment of a base in accordance with the present invention.

The present invention relates to an apparatus for seaming an endless flexible seamed component having improved adhesion at the seam, increased bonding strength, and virtual uniform thickness at the seam. In addition, the apparatus, in embodiments, provides a component having a decrease in ripple effect, thereby resulting in a decrease or elimination of interference with other components that come in contact with the belt during normal cycling. The present invention, in embodiments, allows for relatively fast preparation and manufacture of xerographic components that reduces seam fabrication cycle time due to the decrease in ultraviolet cure time. Furthermore, the apparatus provides a seam having increased seaming bonding strength to decrease tearing as well as enhance the seam's tensile rupture resistance. Moreover, in embodiments, the apparatus provides a seam having a decreased and virtually nil seam height which allows for superior cleaning efficiency and superior development efficiency.

The apparatus may be used to seam various types of components, including belts such as a photoreceptor belt, sheet, or film useful in xerographic, including digital, image on image, and contact electrostatic printing apparatuses. However, the apparatus can be used to seam components for many different processes and components such as photoreceptors, intermediate transfer members, fusing members, transfix members, bias transfer members, bias charging members, developer members, image bearing members, conveyor members, and other members for contact electrostatic printing applications, xerographic applications, including digital, image on image, and contact electrostatic printing. The apparatus seams components using a process which forms a strength enhancing bond between voids of mutually mating elements. The strength enhancing bond comprises a material which is chemically and physically compatible with the material of the coating layers of the belt.

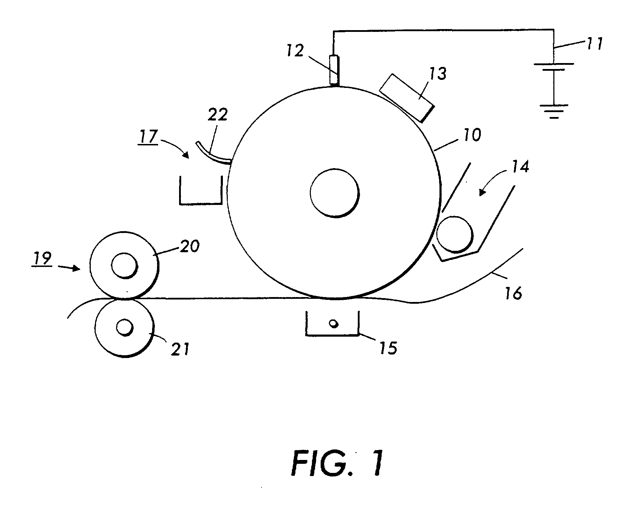

Referring to Figure 1, in a typical electrostatographic reproducing apparatus, a light image of an original to be copied is recorded in the form of an electrostatic latent image upon a photosensitive member. The latent image is subsequently rendered visible by the application of electroscopic thermoplastic resin particles which are commonly referred to as toner. Specifically, photoreceptor 10 is charged on its surface by means of a charger 12. A voltage is supplied from power supply 11. The photoreceptor is then imagewise exposed to light from an optical system or an image input apparatus 13, such as a laser and light emitting diode, to form an electrostatic latent image thereon. Generally, the electrostatic latent image is developed by contacting the image with a developer mixture from developer station 14. Development can be effected by use of a magnetic brush, powder cloud, or other known development process.

After the toner particles have been deposited on the photoconductive surface, in image configuration, they are transferred to a copy sheet 16 by transfer means 15. Transfer means 15 can be pressure transfer or electrostatic transfer. Alternatively, the developed image can be transferred to an intermediate transfer member and subsequently transferred to a copy sheet.

After the transfer of the developed image is completed, copy sheet 16 advances to fusing station 19, depicted in Figure 1 as fusing and pressure rolls. At fusing station 19, the developed image is fused to copy sheet 16 by passing copy sheet 16 between the fusing member 20 and pressure member 21, thereby forming a permanent image. Fusing may alternatively be accomplished by other fusing members such as a fusing belt in pressure contact with a pressure roller, fusing roller in contact with a pressure belt, or other like systems. Photoreceptor 10, subsequent to transfer, advances to cleaning station 17, wherein any toner left on photoreceptor 10 is cleaned therefrom by use of a blade 22 (as shown in Figure 1), brush, or other cleaning apparatus.

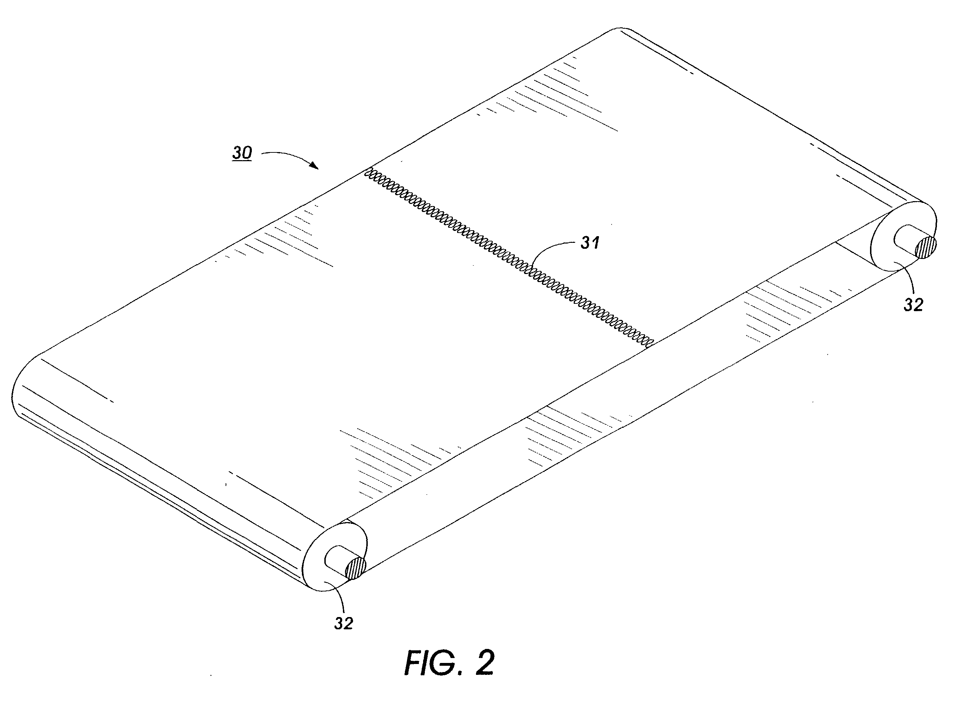

Figure 2 demonstrates an example of an embodiment of a belt which can be produced in accordance with the present invention. Belt 30 is demonstrated with seam 31. Seam 31 demonstrates an example of one embodiment of a puzzle cut seam. The belt is held in position and turned by use of rollers 32. Note that the mechanical interlocking relationship of the seam 31 is present in a two dimensional plane when the belt 30 is on a flat surface, whether it be horizontal or vertical. While the seam is illustrated in Figure 2 as being perpendicular to the two parallel sides of the belt, it should be understood that the seam may be angled or slanted with respect to the parallel sides. Angling the seam enables any noise generated in the system to be distributed more uniformly and the forces placed on each mating element or node to be reduced.

In a preferred embodiment, the apparatus may seam belt ends which are held together by the geometric relationship between the ends of the belt material, which are fastened together by a puzzle cut. The puzzle cut seam can be of many different configurations, but is one in which the two ends of the seam interlock with one another in a manner of a puzzle. Specifically, the mutually mating elements comprise a first projection and a second receptacle geometrically oriented so that the second receptacle on the first end receives the first projection on the second end, and wherein the first projection on the first end is received by the second receptacle on the second end. The seam has a kerf, void or crevice between the mutually mating elements at the two joining ends of the belt, and that crevice can be filled with an adhesive according to the present invention. The opposite surfaces of the puzzle cut pattern are bound or joined together to enable the seamed flexible belt to essentially function as an endless belt. In embodiments, the seam including the puzzle cut members, is held together by an ultraviolet curable adhesive, which provides improved seam quality and smoothness with substantially no thickness differential between the seam and the adjacent portions of the belt. This improved belt provides enhanced imaging, registration and control as discussed above, in addition to a decrease or elimination of ripple effect. In this regard, it should be noted that the lower the differential in seam height, the less the mechanical action force against a cleaning blade and machine subsystems. Therefore, the traveling speed variance is lessened.

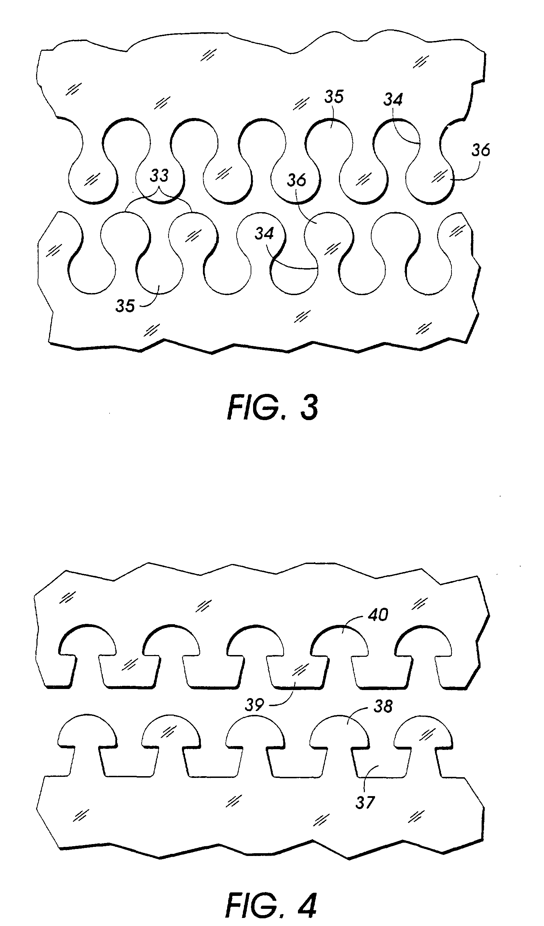

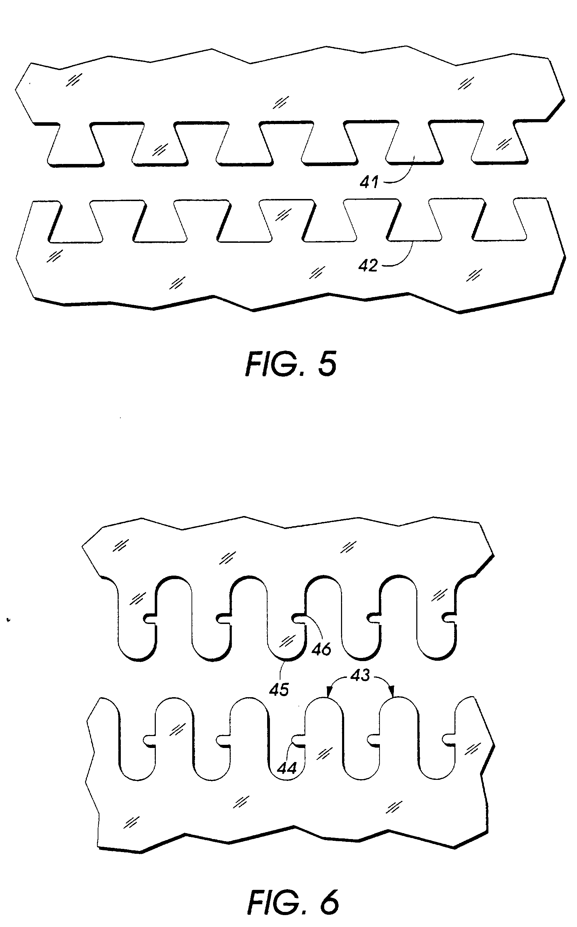

An example of an embodiment of a puzzle cut seam having two ends, each of the ends comprising puzzle cut members or mutually mating elements is shown in Figure 3. The puzzle cut pattern may take virtually any form, including that of nodes such as identical post or neck 34 and head 33 or node patterns having projections 36 and receptacles 35 which interlock when brought together as illustrated in Figure 3. The puzzle cut pattern may also be of a more mushroom-like shaped pattern having first projections 38 and 39 and second receptacles 40 and 37 as illustrated in Figure 4, as well as a dovetail pattern as illustrated in Figure 5 having first projections 41 and second receptacles 42. The puzzle cut pattern illustrated in Figure 6 has a plurality of first fingers 43 with interlocking teeth 44 and plurality of second fingers 45 which have recesses 46 to interlock with the teeth 44 when assembled. It is preferred that the interlocking elements all have curved mating elements to reduce the stress concentration between the interlocking elements and permit them to separate when traveling around curved members such as the rolls 32 of Figure 2. It has been found that with curved mating elements that the stress concentration is lower than with square corners where rather than the stress being uniformly distributed it is concentrated leading to possible failure.

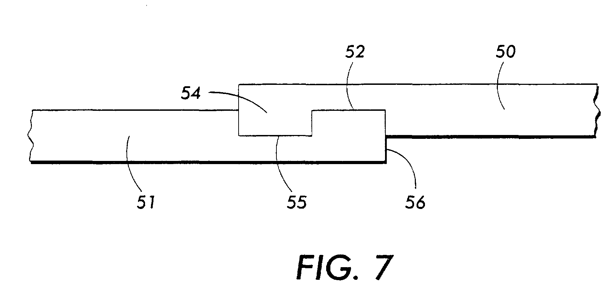

Another example of a puzzle cut seam is shown in Figure 7. Therein, the mutually mating elements or puzzle cut members comprise a first member 50 and a second member 51, wherein the first member 50 comprises a first receptacle 52 and a first projection 54, and the second member 51 comprises a second receptacle 55 and a second projection 56. The first receptacle 52 of the first member 50 receives the second projection 56 of the second member 51, and the second receptacle 55 of the second member 51 receives the first projection 54 of the first member 50. In order to reduce the height differential between the seamed portion and the adjacent, unseamed portion of the belt, it is desirable to have the second receptacles formed within their individual members at a substantial depth in a portion of the belt as the belt ends.

It is preferred that the height differential between the seam and the rest of the component (the unseamed portions of the component) be practically nil, or from about 0 to about 50 micrometers, preferably from about 0.0001 to about 25 micrometers, and particularly preferred of from about 0.01 to about 20 micrometers.

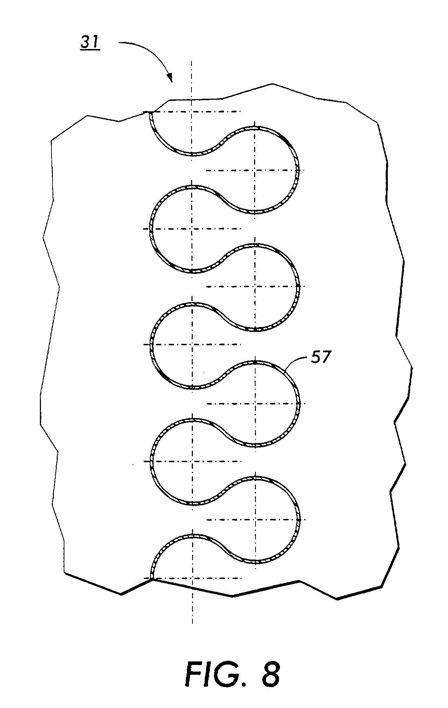

An adhesive is preferably present between the seam, and placed in the crevice between the puzzle cut members to a thickness of from about 0.0001 to about 0.1 inches, and preferably about 0.001 inches or about 25 micrometers. As shown in one embodiment of a puzzle cut seam 31 according to the present invention, the adhesive is present between the puzzle cut members and at the seam crevice 57 of Figure 8.

A preferred adhesive for use with the puzzle cut component seam is an ultraviolet curable adhesive. Examples of suitable ultraviolet curable adhesives include epoxy materials, and especially acrylic epoxy. Specific examples include LIGHT WELD® 438 and LIGHT WELD® 469 available from DyMax Corporation; ENXIBAR® UV 1244 from Alpha Metals; Loctite 3106, 3105 and LITE TAK® 3761 from Loctite Corporation; UV 1004-LV550 from Rad Cure Corporation; EMCAST® 1900, EMCAST® 1900LV, EMCAST® 1904, and EMCAST® 1900XP from Electronic Materials, Inc.; LUX TRAK 4124 (LCM 24) and LUCTREK 4170 (LCM 35) from AbleStik; and like ultraviolet curable adhesives. Preferably, the adhesives have a viscosity of from about 100 to about 5000 centepoise, preferably from about 200 to about 1,000 centepoise. The ultraviolet curable adhesive eliminates the need for high temperatures normally necessary for curing adhesives into seams for seam bonding. The ultraviolet curable adhesive is placed between the mutually mating seam elements, in the void or crevice between seam members. The seam is then cured using ultraviolet light. Curing may be accomplished by pulsed curing, or a continuous ultraviolet curing procedure. Preferably, the ultraviolet curable adhesive is transparent to enable the radiation to penetrate through the adhesive to provide a complete cure.

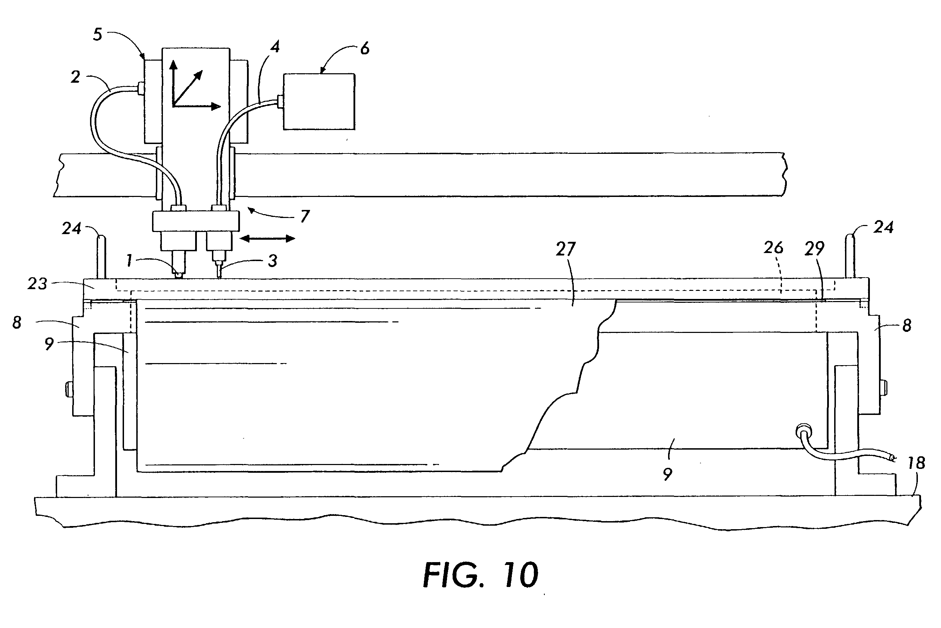

The seaming apparatus will be explained in detail. In a preferred embodiment of the invention, the seaming apparatus functions by dispensing a suitable adhesive between two ends of a component to be seamed, and curing the adhesive in the seam with ultraviolet light. An example of such an apparatus is depicted in Figures 10, 11 and 12. Figure 10 depicts an example of a preferred apparatus according to an embodiment of the present invention.

Figure 10 depicts a base 8 on which to position the component to be seamed. In a preferred embodiment, the base has aperture 26 therein. Preferably, aperture 26 has a width corresponding to the width of the puzzle cut seam. Preferably, aperture 26 has a length that corresponds to the length of base 8, and that corresponds to the length of the component seam on the portion of the component which is subjected to seaming and curing. Positioned under the base is a second curing source or indirect curing source 9. A first curing source or direct curing source is depicted as 1 in Figure 10, in combination with second curing source line 2 which attaches to power source 5. Adhesive dispenser 3 is shown in combination with adhesive dispenser line 4. Line 4 attaches to adhesive container 6 which stores the adhesive for dispensing via adhesive dispenser 3 along the seam.

When an un-seamed component having two ends to be seamed is placed on base 8, adhesive is dispensed from adhesive container 6 through adhesive dispenser line 4. The adhesive is dispersed through adhesive dispenser 3 onto the seam between the two ends of the component to be seamed. In a preferred puzzle cut seam component, the adhesive is dispensed between mutually mating elements of the puzzle cut seam. Subsequently, a cure is accomplished by exposing the adhesive between the two ends of the belt to at least one or both of the first and/or second curing sources. In a preferred embodiment, the seam is cured both from above the component (through first curing source 1) and from below the component (through second curing source 9). The cure is effected from power source 5 and is transported through first cure source line 2 and is fed along the seam by first cure source 1. In a preferred embodiment, first cure source 1 illuminates ultraviolet light in order to cure the adhesive. Curing can also be effected by exposing a cure along the seam by second cure source 9 through aperture 26 of base 8. In a preferred embodiment, cure is also effected by use of ultraviolet light radiating from second cure source 9. The holder 18 secures second cure source 9 and base 8.

A positioning device 7 controls the positions and movement of the adhesive and cure dispensers. In a preferred embodiment, the positioning device positions the adhesive and cure dispensers in x, y, and z planes to correspond to the seam of the puzzle cut belt and to correspond with the aperture 26 of the base 8. Figure 10 depicts arrows demonstrating the possible movement of the positioning device 7 in x, y and z positions. The positioning device 7 can be operated by a computer which is electronically connected therewith, or can be operated manually or in other known manners. In a preferred embodiment wherein a computer controls the movement of the positioning device, the computer can be programmed to move the dispenser 3 and cure source 1 for various puzzle cut patterns and dimensions, and to facilitate seaming of a multitude of seam widths, lengths and thicknesses and configurations. In this manner, sophisticated and intricate puzzle cut seam configurations can be seamed.

Preferably, the adhesive is administered to the component by movement of the adhesive dispenser 3 dispensing adhesive in a even distribution along the component seam. The dispensing of the adhesive occurs along the two ends of the component which corresponds to the aperture 26 of securing device 23. In this embodiment, the adhesive disperser 3 travels along the aperture 26 dispensing adhesive, making one pass along the component. Adhesive dispenser 3 returns to its original starting position after dispensing the adhesive. Adhesive dispenser preferably does not dispense any adhesive on the return pass, although the apparatus may be configured to dispense on the return pass in an alternative embodiment. In one embodiment, subsequent to the dispensing of the adhesive and return of the dispenser, the cure source 1 travels along the same path as the adhesive dispenser 3. The first cure source 1 and the second cure source 9 cure the seam as the first cure source 1 travels along the aperture 26 corresponding with the two ends of the component. In an alternative embodiment, the adhesive dispenser 3 and first cure source 1 may travel along the aperture path simultaneously, with the first cure source 1 following adhesive dispenser 3.

The speed for each pass of the dispenser(s) varies, depending on the viscosity of the adhesive, the length of the component, and other factors. Preferably, the speed of the dispensing is from about 0.1 to about 30 inches/second, preferably from about 1 to about 5 inches/second. A desirable speed in terms of half a minute time period is from about 90 inches/30 seconds.

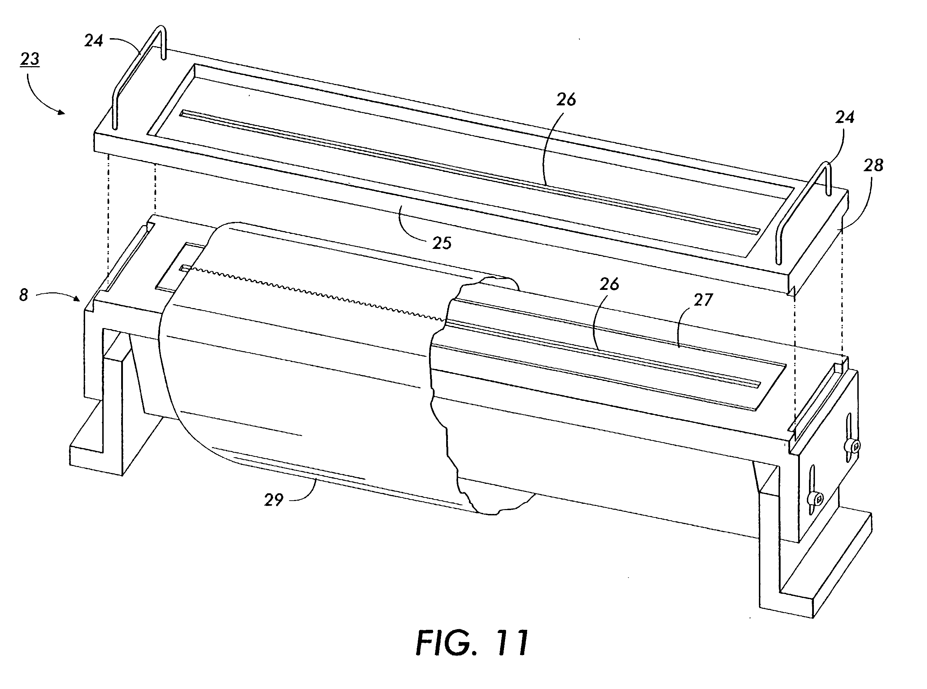

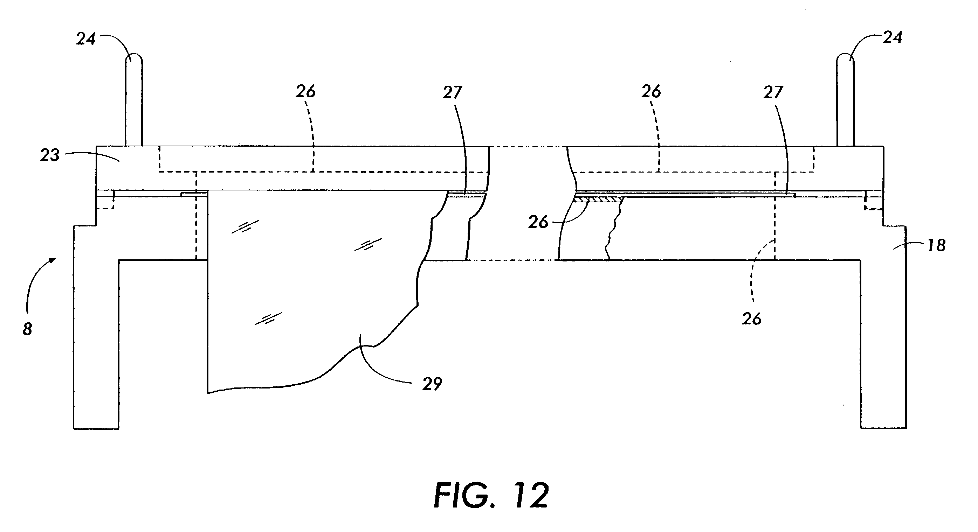

In a preferred embodiment of the seaming apparatus as shown in Figures 10 and 11, a securing device 23 is positioned over the base 8 so as to interlock the securing device 23 and base 8. As shown in Figures 11 and 12, the component 29 is placed on base 8. Securing device 23 is positioned over the component 29. Securing device 23 secures the component in position for dispensing of the adhesive and for curing of the seam. Securing device 23 comprises handles 24, lateral sides 25 and transverse sides 28, and fits securely over base 8. Securing device 23 comprises an aperture 26. The material housing aperture 26 may or may not be transparent. Preferably, the material housing aperture 26 is a transparent material. Securing device 23 includes aperture 26 through which adhesive can be dispensed onto the component to be seamed, and through which curing source from first cure source can be effected in order to cure the component to be exposed to the adhesive dispenser and cure source(s).

In a preferred embodiment as depicted in Figure 11, base 8 comprises aperture 26, and thereover, releasing layer 27. Aperture 26 of base 8 corresponds in dimensions (length, width and depth) to aperture 26 of securing device 23. Releasing layer 27 may or may not be transparent. In a preferred embodiment, releasing layer 27 is transparent and in an even more preferred embodiment, comprises a silicone or fluoropolymer material. In a particularly preferred embodiment, transparent releasing layer 27 comprises a polyethylene terephthalate layer, with a thin layer of silicone or fluorosilicone thereover. A preferred silicone material is silicone coated film from Bertek, St. Albans, Vermont.

The seaming apparatus may be designed to function via a computer program, wherein the apparatus is programmed to position a first section of a component, dispense a line of adhesive, cure, position the component for curing a second unseamed portion of the component, dispense a line of adhesive and cure, and repeat these steps until an entire component is seamed. The seaming apparatus can also be programmed to dispense adhesive into various and numerous puzzle cut seam shapes. In addition, the seaming apparatus can be programmed to place a larger amount of adhesive at certain positions along the seam. In a preferred embodiment, a larger amount of adhesive is dispensed at the beginning and end of the seam.

Preferably, the first cure source and second cure source effect curing by use of ultraviolet light. Preferably, UV wavelengths for both the first cure source and second cure source are the same. In a preferred embodiment, the wavelengths range from about 200 to about 700 nanometers, preferably from about 320 to about 480 nanometers. Preferably, the UV light from the first cure source is more intense than that of the second cure source. In an alternative embodiment, light from first cure source is relatively intense, and there is no need for the second cure source. UV intensities depend on the power of the UV source lamp and distance from the applied adhesive. Lamp powers range from about 20 to about 200 watts and distances range from about 0.001 to about 4 inches, preferably from about 0.5 to about 3 inch.

The seam height and seam strength can be varied by varying the amount of adhesive applied to the seam, and/or the viscosity of the adhesive and/or by varying the position of the adhesive dispenser 3 from the surface of the belt. Preferably, the adhesive dispenser is positioned a height of from about 0.01 to about 4 inches from the component, preferably from about 0.02 to about 0.08 inches.

Preferably, the dispensing units have a pressure of from about 4 to about 12 psi, and more preferably from about 6 to about 10 psi. The orifice diameter of the dispensing units are preferably from about 0.004 to about 0.61 inches, more preferably about 0.054 inches. Preferably, the speed of the adhesive dispenser is less than about 30 inches/second, more preferably less than about 0.6 inches/second. The speed of the first cure source is preferably less than about 30 inches/second, more preferably less than about 0.3 inches/second. In the embodiment wherein ultraviolet light is used as the cure source, the intensity of the UV light is preferably from about 500 to about 600 milliwatts/sq-cm. Seam adhesive may be finished in some way; for example passing a squeegee or blade over the adhesive before UV exposure. A leveling device may be used after the adhesive is dispensed, but before curing, so as to level and/or smooth the adhesive. This leveling device can be in the form of a brush, blade, air knife or other leveling device, and may be a part of the seaming apparatus, or separate therefrom. Higher viscosity adhesives can be forced into the crevice.

Following fabrication, the component may be finished by way of buffing or sanding. In addition, an overcoating may be applied using known procedures. Examples of suitable overcoatings include polymer coatings, adhesive coatings, release layer coatings, and the like. Specifically preferred overcoatings include polymer coatings comprising polycarbonate transport layers. The overcoatings may or may not contain conductive fillers such as metal oxides, graphite, carbon black, or like conductive fillers.

The components prepared using embodiments disclosed herein, have increased pull strengths of up to about 50, preferably from about 15 to about 50, and particularly preferred of from about 35 to about 40 pounds/inch. The flex life of the components (for example, flexing around 25 mm diameter rollers) is up to about 10,000,000, preferably from about 550,000 to about 8,500,000, and particularly preferred of from about 1,000,000 to about 8,500,000 cycles. In addition, in a preferred embodiment, adhesion between component layers will fail before seam failure occurs.

Because in a preferred embodiment, ultraviolet light is used instead of heat to cure the adhesive, there is a reduction in spattering of melted adhesive material. In the case of a photoreceptor belt as the component to be seamed, spattering of component material causes peaks which increase the effective seam height and interfere with charging corotrons and other elements placed in proximity to the component. Increasing the distance increases power consumption and restricts the use of some architectures. Therefore, the ripple effect is reduced or eliminated. Some substrate materials are biaxially oriented such as (PET). The high temperatures relax the orientation causing a ripple. Ripple creates an increase in height which causes problems as described above.

The ripple in the overlap seams is from about 0.18 to about 0.46 mm. This is compared to known puzzle cut seams which have demonstrated ripple in the seam of from about 0.1 to about 0.15 mm. The decrease in ripple allows for a reduction or elimination in interference by the ripple with other components which the seamed component may come in contact with during cycling. The reduction in ripple effect is especially advantageous in systems which comprise hybrid scavengeless development components which are very sensitive to mechanical noise and other disturbances that may be caused by belt ripple. Puzzle cut seams prepared with little or no ripple reduce or eliminate disturbance of HSD components.

The seam height of the seamed components seamed by the seaming apparatus is reduced to practically nil, in embodiments. The seam height is further reduced by use of the fixture prior to curing the ultraviolet adhesive. The seam height differential between the seamed portion of the belt and an unseamed portion of the belt is virtually nil, or from about 0.001 to about 50 microns.

In addition, the components provide for a decrease in belt fabrication time. Normally, curing of UV curable adhesives requires UV cure time of about 30 minutes. The present apparatus allows for a reduction in cure time to less than about 1 minute, preferably from about 10 seconds to about 1 minute. The cure time for the component is from about 1.9 seconds/inch to about 60 seconds/inch of belt.

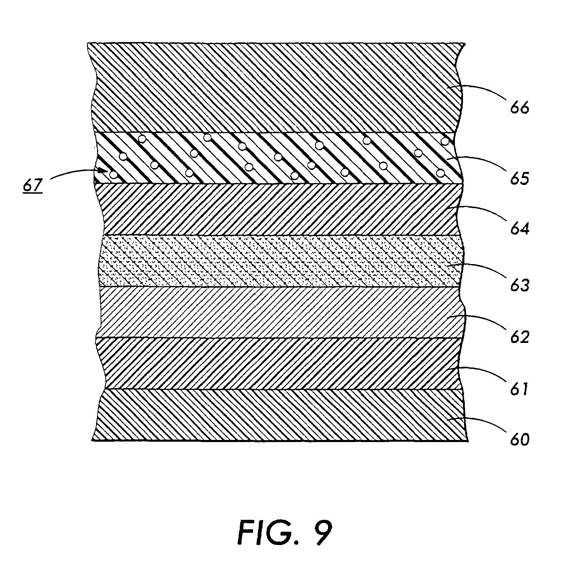

An example of a preferred component used in combination with the ultraviolet curable adhesive is a layered photoreceptor belt, as depicted in Figure 9. The belt comprises the following layers in the following order. A substrate 61 comprising a polyester, for example, polyethylene terephthalate is present in the seven layer photoreceptor belt. An anticurl backing layer 60 comprising a polymer such as polycarbonate is present on the underside of the substrate. On the upper side of the substrate 61 is present a conductive layer 62 comprising one or more metals, for example, zirconium on top of titanium. Present on the conductive layer 62 is a charge blocking layer 63 comprising an amino siloxane, such as a siloxane formed from a gamma aminopropyl triethoxy silane. Present on the charge blocking layer 63 is an adhesive layer 64 which may comprise an interfacial layer such as polyester. Present on the adhesive layer 64 is charge generating layer 65 comprising particles 67 dispersed in a film forming polymer, for example crystal particles such as trigonal selenium particles dispersed in a film forming binder. Present on the layer 65 is a charge transport layer 66 which can comprise a polymer such as polycarbonate in combination with a small molecule such as an aryl amine.

The following Examples further define and describe embodiments of the present invention. Unless otherwise indicated, all parts and percentages are by weight.

### Example I

### Preparation of Photoreceptor Belt

An electrophotographic imaging member web was prepared by providing a roll of titanium coated biaxially oriented thermoplastic polyester (MELINEX® 442, available from ICI Americas, Inc.) substrate having a thickness of about 3 mils (76.2 micrometers) and applying thereto, using a gravure applicator, a solution containing 50 parts by weight 3-aminopropyltriethoxysilane, 50.2 parts by weight distilled water, 15 parts by weight acetic acid, 684.8 parts by weight of 200 proof denatured alcohol, and 200 parts by weight heptane. This layer was then dried to a maximum temperature of 290°F (143.3°C) in a forced air oven. The resulting blocking layer had a dry thickness of about 0.05 micrometers.

An adhesive interface layer was then prepared by applying to the blocking layer a wet coating containing 5 percent by weight, based on the total weight of the solution, of polyester adhesive (MOR-ESTER® 49,000, available from Morton International, Inc.) in a 70:30 volume ratio mixture of tetrahydrofuran/cyclohexanone. The adhesive interface layer was dried to a maximum temperature of 275°F (135°C) in a forced air oven. The resulting adhesive interface layer had a dry thickness of about 0.07 micrometers.

The adhesive interface layer was thereafter coated with a photogenerating layer containing 7.5 percent by weight volume trigonal selenium, 25 percent by volume N,N'-diphenyl-N,N'-bis(3-methylphenyl)-1,1'biphenyl-4,4'-diamine, and 67.5 percent by volume polyvinylcarbazole. This photogenerating layer was prepared by introducing 160 grams polyvinylcarbazole and 2,800 mls of a 1:1 volume ratio of a mixture of tetrahydrofuran and toluene into a 400 oz. amber bottle. To this solution was added 160 grams of trigonal selenium and 20,000 gms of 1/8 inch (3.2 millimeters) diameter stainless steel shot. This mixture was then placed on a ball mill for from about 72 to about 96 hours. Subsequently, 500 grams of the resulting slurry were added to a solution of 36 grams of polyvinylcarbazole and 20 grams of N,N'-diphenyl-N,N'-bis(3-methylphenyl)-1,1'biphenyl-4,4'-diamine dissolved in 750 mls of 1:1 volume ratio of tetrahydrofuran/toluene. This slurry was then placed on a shaker for 10 minutes. The resulting slurry was thereafter applied to the adhesive interface by extrusion coating to form a layer having a wet thickness of about 0.5 mil (12.7 micrometers). However, a strip about 3 mm wide along one edge of the coating web, having the blocking layer and adhesive layer, was deliberately left uncoated without any of the photogenerating layer material to facilitate adequate electrical contact by the ground strip layer that is applied later. This photogenerating layer was dried to a maximum temperature of 280°F (138°C) in a forced air oven to form a dry thickness photogenerating layer having a thickness of about 2.0 micrometers.

This coated imaging member web was simultaneously overcoated with a charge transport layer and a ground strip layer by co-extrusion of the coating materials. The charge transport layer was prepared by introducing into an amber glass bottle in a weight ratio of 1:1 N,N'-diphenyl-N,N'-bis(3-methylphenyl)-1,1'-biphenyl-4,4'-diamine and MAKROLON® 5705, a polycarbonate resin having a molecular weight of about 120,000 and commercially available from Farbensabricken Bayer A.G. The resulting mixture was dissolved to give 15 percent by weight solid in methylene chloride. This solution was applied on the photogenerating layer by extrusion to form a coating which upon drying gave a thickness of about 24 micrometers.

The strip, about 3 mm wide, of the adhesive layer left uncoated by the photogenerator layer, was coated with a ground strip layer during the co-extrusion process. The ground strip layer coating mixture was prepared by combining 23.81 grams of polycarbonate resin (MAKROLON® 5705, 7.87 percent by total weight solids, available from Bayer A.G.), and 332 grams of methylene chloride in a carboy container. The container was covered tightly and placed on a roll mill for about 24 hours until the polycarbonate was dissolved in the methylene chloride. the resulting solution was mixed for from about 15 to about 30 minutes with about 93 grams of graphite dispersion (12.3 percent by weight solids) of 9.41 parts by weight graphite, 2.87 parts by weight ethyl cellulose and 87.7 parts by weight solvent (Acheson Graphite dispersion RW22790, available from Acheson Colloids Company) with the aid of a high shear blade dispersed in a water cooled, jacketed container to prevent the dispersion from overheating and losing solvent. The resulting dispersion was then filtered and the viscosity was adjusted with the aid of methylene chloride. This ground strip coating mixture was then applied, by co-extrusion with the charge transport layer, to the electrophotographic imaging member web to form an electrically conductive ground strip layer having a dried thickness of about 14 micrometers.

The resulting imaging member web containing all of the above layers was then passed through a maximum temperature zone of 240°F (116°C) in a forced air oven to simultaneously dry both the charge transport layer and the ground strip.

An anti-curl coating was prepared by combining 88.2 grams of polycarbonate resin (MAKROLON® 5705, available from Goodyear Tire and Rubber Company) and 900.7 grams of methylene chloride in a carboy container to form a coating solution containing about 8.9 percent solids. The container was covered tightly and placed on a roll mill for about 24 hours until the polycarbonate and polyester were dissolved in the methylene chloride. An amount of 4.5 grams of silane-treated microcrystalline silica was dispersed in the resulting solution with a high shear dispersion to form the anti-curl coating solution. The anti-curl coating solution was then applied to the rear surface (side opposite the photogenerator layer and charge transport layer) of the electrophotographic imaging member web by extrusion coating and dried to a maximum temperature of 220°F (104°C) in a forced air oven to product a dried coating layer having a thickness of 13.5 micrometers.

### Example II

### Preparation of Puzzle cut seam using puzzle cut seaming apparatus

The electrophotographic imaging member web of Example I having a width of 353 millimeters, was cut into a rectangular sheet of about 559.5 millimeters in length. The opposite ends of each imaging member were placed on the base over the transparent releasing layer. The mutually mating elements were interlocked securely in place. The securing device was placed on the belt, the two ends of the belt overlapping in the puzzle cut configuration. The puzzle cut mating surfaces were thereby secured in place for seaming.

An optimum amount 0.05 g/inch of adhesive was applied from the adhesive dispenser in accordance with the present invention. The adhesive was applied at a rate of 30 inches/90 seconds. After applying an optimum amount of adhesive, the xyz positioning equipment is positioned so that the first cure source pen is positioned over the seam adhesive. A bead of UV adhesive was cured at a speed of 30inches/90 seconds. The adhesive is also cured from a second cure source that is below the base.

### Example III

### Preparation of puzzle cut seam using known methods

The electrophotographic imaging member web of Example I having a width of 353 millimeters, was cut into a rectangular sheet of about 559.5 millimeters in length. The opposite ends of each imaging member were overlapped 1 mm and joined by an ultrasonic energy seam welding process using a 40 Khz horn frequency to form a seamed electrophotographic imaging member belt.

The ultrasonically welded belt had two 0.75 mm seam splashes, one on the top surface of the belt over the charge transport layer while the other on the top surface inside belt over the anti-curl backing layer, adjacent the 1 mm overlapped seam. The welded seam had a 75 micrometers added thickness than that of the main body of the belt when measured with a micrometer. This ultrasonic welded seam represents a known seam design.

## Claims

1. A seaming apparatus for dispensing and curing an adhesive between two ends of a component (29) so as to seam said component comprising:
a base (8), on which to position the component;
a first ultraviolet curing source (1) to cure said adhesive between said two ends of said component
**characterized by**
an adhesive dispenser (3) to dispense said adhesive between the two ends of the component (29) to be seamed.

2. A seaming apparatus as set forth in claim 1, wherein said adhesive is an ultraviolet curable adhesive.

3. A seaming apparatus as claimed in claim 2, wherein said ultraviolet curable adhesive comprises an epoxy material.

4. A seaming apparatus according to any of the claims 1 to 3, wherein said base (8) comprises a second curing source (9).

5. A seaming apparatus according to claim 4, wherein said second curing source (9) cures said adhesive using ultraviolet light.

6. A seaming apparatus according to any of the claims 1 to 5, wherein said ultraviolet light has a wavelength of from about 200 to about 700 nanometers.

7. A seaming apparatus according to any of the claims 1 to 6, wherein said wavelength is from about 320 to about 480 nanometers.

8. A seaming apparatus according to any of the claims 1 to 7, wherein said ultraviolet light has an intensity of from about 500 to about 600 milliwatts/sq-cm.

9. A seaming apparatus as set forth in claim 1, wherein said component (29) to be seamed comprises two ends which comprise mutually mating elements.

10. A seaming apparatus as set forth in claim 9, wherein said mutually mating elements comprise a first projection and a second receptacle geometrically oriented so that said second receptacle on the first end receives the first projection on the second end and wherein said first projection on said first end is received by said second receptacle on the second end to form a joint between the first and second ends.

## Patentansprüche

1. Verschweißvorrichtung zum Verteilen und Aushärten eines Klebstoffs zwischen zwei Enden eines Bauteils (29), um das Bauteil zu verschweißen, die umfasst:
ein Unterteil (8), auf dem das Bauteil zu positionieren ist;
eine erste Ultraviolett-Aushärt-Quelle (1) zum Aushärten des Klebstoffs zwischen den zwei Enden des Bauteils,
**gekennzeichnet durch:**
eine Klebstoff-Verteileinrichtung (3) zum Verteilen des Klebstoffs zwischen den zwei zu verschweißenden Enden des Bauteils (29).

2. Verschweißvorrichtung nach Anspruch 1, wobei der Klebstoff ein UV-aushärtbarer Klebstoff ist.

3. Verschweißvorrichtung nach Anspruch 2, wobei der UV-aushärtbare Klebstoff ein Epoxydharzmaterial umfasst.

4. Verschweißvorrichtung nach einem der Ansprüche 1 bis 3, wobei das Unterteil (8) eine zweite Aushärt-Quelle (9) umfasst.

5. Verschweißvorrichtung nach Anspruch 4, wobei die zweite Aushärt-Quelle (9) den Klebstoff unter Verwendung von ultraviolettem Licht aushärtet.

6. Verschweißvorrichtung nach einem der Ansprüche 1 bis 5, wobei das ultraviolette Licht eine Wellenlänge zwischen ungefähr 200 und ungefähr 700 nm hat.

7. Verschweißvorrichtung nach einem der Ansprüche 1 bis 6, wobei die Wellenlänge zwischen ungefähr 320 und ungefähr 480 nm beträgt.

8. Verschweißvorrichtung nach einem der Ansprüche 1 bis 7, wobei das ultraviolette Licht eine Intensität zwischen ungefähr 500 und ungefähr 600 Milliwatt/cm² hat.

9. Verschweißvorrichtung nach Anspruch 1, wobei das zu verschweißende Bauteil (29) zwei Enden umfasst, die ineinander passende Elemente umfassen.

10. Verschweißvorrichtung nach Anspruch 9, wobei die ineinander passenden Elemente einen ersten Vorsprung und eine zweite Aufnahme umfassen, die geometrisch so ausgerichtet sind, dass die erste Aufnahme an dem ersten Ende den ersten Vorsprung an dem zweiten Ende aufnimmt, und wobei der erste Vorsprung an dem ersten Ende durch die zweite Aufnahme an dem zweiten Ende aufgenommen wird, um eine Verbindung zwischen dem ersten und dem zweiten Ende auszubilden.

## Revendications

1. Appareil d'assemblage destiné à distribuer et à traiter un adhésif entre les deux extrémités d'un composant (29) de manière à assembler ledit composant, comprenant :
une base (8) sur laquelle on positionne le composant ;
une première source de traitement par ultraviolets (1) destinée à traiter ledit adhésif entre lesdites deux extrémités dudit composant ;
**caractérisé par**
un distributeur (3) d'adhésif destiné à distribuer ledit adhésif entre les deux extrémités du composant (29) à assembler.

2. Appareil d'assemblage selon la revendication 1, dans lequel ledit adhésif est un adhésif pouvant être traité par les ultraviolets.

3. Appareil d'assemblage selon la revendication 2, dans lequel ledit adhésif pouvant être traité par les ultraviolets comprend un matériau époxy.

4. Appareil d'assemblage selon l'une quelconque des revendications 1 à 3, dans lequel ladite base (8) comprend une deuxième source de traitement (9).

5. Appareil d'assemblage selon la revendication 4, dans lequel ladite deuxième source de traitement (9) traite ledit adhésif au moyen d'une lumière ultraviolette.

6. Appareil d'assemblage selon l'une quelconque des revendications 1 à 5, dans lequel ladite lumière ultraviolette a une longueur d'onde comprise entre environ 200 nanomètres et environ 700 nanomètres.

7. Appareil d'assemblage selon l'une quelconque des revendications 1 à 6, dans lequel ladite longueur d'onde est comprise entre environ 320 nanomètres et environ 480 nanomètres.

8. Appareil d'assemblage selon l'une quelconque des revendications 1 à 7, dans lequel ladite lumière ultraviolette a une intensité comprise entre environ 500 et environ 600 milliwatts/cm².

9. Appareil d'assemblage selon la revendication 1, dans lequel ledit composant (29) à assembler comprend deux extrémités qui comprennent mutuellement des éléments de raccordement.

10. Appareil d'assemblage selon la revendication 9, dans lequel lesdits éléments de raccordement mutuel comprennent une première saillie et un deuxième logement géométriquement orientés de manière à ce que le deuxième logement sur la première extrémité reçoive la première saillie sur la deuxième extrémité et dans lequel ladite première saillie sur ladite première extrémité est reçue par ledit deuxième logement sur la deuxième extrémité de manière à constituer un assemblage entre les première et deuxième extrémités.
